(19) **Europäisches Patentamt European Patent Office Office européen des brevets**

(11) **EP 4 216 197 B1**

(12) **EUROPEAN PATENT SPECIFICATION**

(45) Date of publication and mention of the grant of the patent:
**01.05.2024 Bulletin 2024/18**

(21) Application number: **23275013.3**

(22) Date of filing: **19.01.2023**

(51) International Patent Classification (IPC):
***G09B 25/02*** (2006.01)

(52) Cooperative Patent Classification (CPC):
**G09B 25/02; G09B 25/025; Y02A 10/40**

(54) **EXPERIMENT SIMULATION SYSTEM AND EXPERIMENT SIMULATION METHOD FOR RESERVOIR SEDIMENT PEAK SCHEDULING**

EXPERIMENTSIMULATIONSSYSTEM UND EXPERIMENTSIMULATIONSVERFAHREN FÜR RESERVOIRSEDIMENTSPITZENPLANUNG

SYSTÈME DE SIMULATION D'EXPÉRIMENTATION ET PROCÉDÉ DE SIMULATION D'EXPÉRIMENTATION POUR UNE PLANIFICATION DE PIC DE SÉDIMENTS DE RÉSERVOIR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.01.2022 CN 202210079172**

(43) Date of publication of application:
**26.07.2023 Bulletin 2023/30**

(73) Proprietor: **China Three Gorges Corporation Wuhan, Hubei 430010 (CN)**

(72) Inventors:
- **DAI, Huichao**
  **Wuhan, Hubei, 430010 (CN)**
- **ZHAO, Hanqing**
  **Wuhan, Hubei, 430010 (CN)**
- **MAO, Jingqiao**
  **Wuhan, Hubei, 430010 (CN)**
- **CHEN, Yanhong**
  **Wuhan, Hubei, 430010 (CN)**
- **GONG, Yiqing**
  **Wuhan, Hubei, 430010 (CN)**
- **DAI, Jie**
  **Wuhan, Hubei, 430010 (CN)**
- **MENG, Dinghua**
  **Wuhan, Hubei, 430010 (CN)**
- **ZHANG, Chengxiao**
  **Wuhan, Hubei, 430010 (CN)**
- **JIANG, Dingguo**
  **Wuhan, Hubei, 430010 (CN)**

(74) Representative: **Sach, Greg Robert Valet Patent Services Limited Landsberger Str. 302 80687 München (DE)**

(56) References cited:
**CN-A- 108 286 237    CN-A- 111 021 304
CN-U- 206 768 725    GB-A- 2 578 945
JP-A- H10 266 171**

Remarks:
The file contains technical information submitted after the application was filed and not included in this specification

## Description

### TECHNICAL FIELD

The present invention relates to an experiment simulation system and an experiment simulation method for reservoir sediment peak scheduling, belonging to the field of hydraulic engineering.

### BACKGROUND

Large-scale water conservancy and hydropower engineering has various functions of flood control, power generation, shipping, water resource configuration, etc. However, hydraulic engineering may change upstream and downstream water-sediment conditions, leading to problems of sediment accumulation in a reservoir area, ecological environment change, etc. Due to sediment deposition, the global reservoir storage capacity is gradually decreased, which seriously restricts the sustainable development of water conservancy and hydropower engineering, especially for river channel type reservoirs. The flood peak and sediment peak have more significant asynchronous characteristics in the propagation process in the reservoir area, i.e., the time when the flood peak reaches a certain section is earlier or later than that when the sediment peak reaches, causing sediment accumulation along the channel and reducing the effective reservoir capacity. Therefore, accurate simulation of the water-sediment motion and the reservoir deposition process is the important premise of water-sediment control in the hydraulic and hydroelectric engineering and is of great significance to long-term maintenance of reservoir capacity.

Field observation and numerical simulation are common means of studying the water-sediment motion. Due to restriction of factors such as the water depth in front of dam, dam operation, and wading structures (such as an approach channel), field observation is high in difficulty, high in cost, and low in safety. Numerical simulations require high performance computers for simulating the high water depth and long river reach working conditions, and it is costly and difficult to perform long-sequence water-sediment simulations. The patent CN103711101A has proposed a deformable flume mimicking meandering open channel for water-sediment experiment, which can conveniently change the bend channel shape and adjust the water tank parameters to improve the experiment conditions for local curve water-sediment problems. However, the device is single in structure and relatively low in pertinence, cannot satisfy the water-sediment asynchronous inflow conditions, and cannot satisfy the requirements of sediment peak scheduling process simulation and water-sediment matching measurement. (see also CN108286237).

Accurately understanding of the characteristics of sediment into the reservoir is an effective method to solve the problem of reservoir sediment. For the defects of the existing river channel type reservoir experiment simulation technology, the present invention establishes an experiment simulation system and an experiment simulation method for reservoir sediment peak scheduling, which can be configured to simulate the water-sediment transportation processes of different sediment scheduling methods in a river channel type reservoir. This invention can overcome the difficulty of separating the research of flood peaks and sediment peaks, realizing high-precision simulations of reservoir sediment peak scheduling, and providing a simulation means for sediment discharge control of the river channel type reservoir as well as a theoretical basis for ensuring that the reservoir can maintain effective long-term storage capacity through sediment peak scheduling.

### SUMMARY

The present invention aims to study the water-sediment asynchronous transportation process during the sediment peak scheduling process, and proposes an experiment simulation system and an experiment simulation method for reservoir sediment peak scheduling, which can effectively simulate the varying processes of the inflow rate and the sediment volume over time and the sediment erosion and deposition process in any section of the reservoir area, as well as the sediment transportation laws in scenarios such as "flood peak first, sediment peak later", "flood peak and sediment peak synchronous", and "sediment peak first, flood peak later". The present invention achieves high-precision simulation of sediment control in reservoirs and overcomes the deficiencies of existing technologies. The present invention also provides a theoretical basis for ensuring that the reservoir can maintain effective long-term storage capacity through sediment peak scheduling.

The present invention adopts the following technical schemes to achieve the objective above: an experiment simulation system for reservoir sediment peak scheduling, which includes a flow rate control module, a sediment supply module, a water-sediment experiment module, and a discharged sediment collection module.

Preferably, the flow rate control module is configured to customize a flood flow process that meets experiment requirements, and includes a water storage tank, a water pump, and connecting sections. The storage tank is configured to store experimental water of which the capacity is not less than twice the water volume required for the experiment. The water pump is a Direct Current (DC) variable frequency water pump and implements stepless linear adjustment of the pumping flow rate by adjusting the working frequency of a variable frequency motor. The connecting sections are configured for hydraulic connection between equipment. The connecting section between the water storage tank and the water pump is a pressure steel pipe and the connecting section between the water pump and the downstream water-sediment experiment module is a non-pressure open channel. The conveyance capacity of each connecting section is not less than twice the maximum experimental flow rate.

Preferably, the sediment supply module is configured to set a sediment carrying flow that meets experiment requirements, and includes a sediment feeder, a suspension mixing device, and a flow guiding grille. The sediment feeder is located above the open-channel connecting section and is configured to add experimental sediment into the experimental water flow. The supply rate of the experimental sediment is controlled by dynamically adjusting the opening degree of the sediment feeder The suspension mixing device is located at the bottom of the open-channel connecting section and is configured to implement sufficient mixing of the experimental water flow and the experimental sediment in order to prevent the sediment from settling. The flow guiding grille is located at the tail of the open-channel connecting section and is configured to eliminate large-scale vortices in the water flow.

Preferably, the water-sediment experiment module is configured to carry out a reservoir area sediment peak scheduling experiment, and includes a river reservoir section, a dam body section, and measurement equipment. The river reservoir section is a scaled model of the natural river reservoir at the upstream of the dam and is integrally formed by a high-strength ABS material through 3D printing technique. The dam body section is configured to simulate the dam body and spillway structure, including a water retaining unit, a control unit, and a water release unit. The control unit is configured to control the opening and closing of the sluice gate of the water release unit and control the opening degree of the sluice gate. The water release unit includes a plurality of sluice gates and is configured to release the sediment carrying flow. The measurement equipment is configured to measure water flow and sediment motion parameters of the experiment module.

Preferably, the discharged sediment collection module is configured for water-sediment separation and water-sediment recovery, including a sediment retaining and water drainage device, a sediment collection and processing device, a sediment weighing device, and a water return pipeline. The upstream of the sediment retaining and water drainage device is connected with the water-sediment experiment module, and the sediment retaining and water drainage device is configured to intercept and filter the sediment discharged from the reservoir and achieve water-sediment separation and clear water release. The sediment collection and processing device is configured to collect the sediment released by the reservoir and carry out drying treatment. The sediment weighing device is configured to weigh the dried sediment so as to calculate the sediment discharge ratio of the reservoir. The weighed dry sediment is replenished into the sediment feeder. The water return pipeline connects the sediment retaining and water drainage device and the water storage tank and is configured to replenish the filtered clear water into the water storage tank so as to form a water circulation system.

Preferably, the suspension mixing device is located at the bottom of the open-channel connecting section and includes a pressure sensor, a thin plate grid, and a variable frequency vibration motor. The pressure sensor is configured to measure the bottom water pressure $p$ of the sediment carrying flow in real time. The fluid volume-weight ratio $y$ is calculated according to a formula $p=\gamma h$ in combination with the water depth $h$, and $\gamma$ is positively correlated with the fluid sediment concentration. The mesh size of the thin plate grid is 50 times the median diameter of the sediment. The variable frequency vibration motor is configured to drive the thin plate grid to take an up-and-down reciprocating micro vibration so as to promote suspension of the near-bottom sediment. The start-up condition and the vibration frequency calculation formula are as follows:

$$u_s = \beta f \sqrt{gh},$$

wherein $u_s$ represents the start-up speed of model sand; g represents the gravity acceleration; $f$ represents the vibration grid base frequency; $\beta$ represents the frequency correction coefficient; and $h$ represents the water depth.

Preferably, the experimental model sand released by the sediment feeder is made of a resin shell and quartz endoplasm and can be customized according to the sediment diameter and scale requirements of the experiment by adjusting the content of the quartz endoplasm and the size of the resin shells so as to meet the experiment requirements.

Preferably, the measurement equipment includes a plurality of sets of flow speed measurement probes, water level measurement probes, bed sediment measurement probes, and suspended sediment measurement probes. The flow speed measurement probes are acoustic transit-time probes, which are evenly attached to wall surfaces on both sides along the river reservoir section. The flow speed is measured through the time difference between transmitting and receiving acoustic signals diagonally across the water flow. The water level measurement probes are ultrasonic echo probes arranged above the open-channel connecting section and the river reservoir section, and are configured to calculate the distance between a liquid surface and a gauging point according to the round-trip time of ultrasound between the gauging point and the liquid surface so as to deduce a real-time water level at the liquid surface. The bed sediment measurement probes are high-frequency ultrasonic probes, which are evenly placed on the bottom along the river reservoir section, and are configured to calculate the thickness of the bed sediment according to the time of the ultrasonic round trip from the gauging point to the water-sediment interface. Suspended sediment measurement is performed by the suspended sediment measurement probes which are evenly arranged on the inner wall of the water-sediment experiment module and are configured to monitor the suspended sediment concentration of the water column along the channel.

Preferably, the suspended sediment measurement probe is a micro fluid density measurement device and is characterized by including a serrated driver, a rigid thin sensing plate, a folded beam, and a signal processing unit. The serrated driver is a capacitive driver including a fixed serrated structure and a driving serrated structure. The fixed serrated structure is kept static while the driving serrated structure can freely move. The folded beam is made of polycrystalline silicon and is configured to support other structures and the signal processing unit is configured to convert a current signal into sediment concentration data. When the experimental sediment carrying flow flows through the micro fluid density measurement device, a pressure drop exists between both ends of a micro passage, so that the rigid thin sensing plate generates resonance oscillation. The inherent frequency generated by the rigid thin sensing plate depends on the density of to-be-measured fluid, i.e., a greater density of a measured substance corresponds to a smaller inherent frequency. The capacitance between the fixed serrated structure and the driving serrated structure is changed by the resonance oscillation so as to generate an electric signal. The electric signal is converted into the suspended sediment concentration data by the signal processing unit, and the conversion coefficient needs to be quantitatively calibrated before the experiment.

Preferably, the present invention further discloses an experiment simulation method specifically including the following steps:

S1. An equipment preparation stage: The model's horizontal scale $\lambda_l$ and vertical scale $\lambda_h$ is determined according to actual topographic data of a river channel and a reservoir. Preferably, 3D printing with ABS material is used to form a river reservoir section, and organic glass material is used to build a dam body section. Prior to the experiment, the weight of the model sand should be determined based on suspended load sediment data and sediment scale condition. During the experiment, flow speed measurement probes, water level measurement probes, bed sediment measurement probes, and suspended sediment measurement probes are installed along the channel to synchronously obtain the flow speed, water level, bottom sediment accumulation thickness and suspended sediment concentration of the experimental water flow.

S2. Data preparation stage: According to a process sequence of flow rate, sediment concentration, and sediment transportation time at a hydrometric station at the upstream of a river channel and in combination with related scales, a process sequence of flow rate and sediment concentration input at an inlet of a water-sediment experiment module is drafted. According to the model's horizontal scale $\lambda_l$ and vertical scale $\lambda_h$ and on the basis of a gravity similarity criterion, a flow speed scale is determined as $\lambda_U=\lambda_h^{0.5}$, a flow rate scale is determined as $\lambda_Q=\lambda_l\lambda_h^{1.5}$, a sediment settling velocity scale is determined as $\lambda_\omega=\lambda_h^{1.5}\lambda_l^{-1}$, and a sediment concentration scale is determined as $\lambda_S=\lambda_h^{0.5}\lambda_l^{0.92}$. According to a preset scheduling scheme of a prototype reservoir, a flow rate release process scheme for each sluice gate is drafted.

The opening degree e and the outflow rate $Q_{out}$ of a single sluice gate satisfies the following relationship:

$$Q_{\text{out}} = \left(0.6 - 0.176\frac{e}{H}\right) \cdot b \cdot e\sqrt{2gH} \,,$$

wherein, in the formula, e represents the opening degree of the sluice gate; H represents the water head at the sluice hole, i.e., a difference value between the water level $z$ in front of the dam and the floor elevation; and b represents the sluice hole width, and the total reservoir outflow rate is obtained by accumulating the outflow rates of all the respective sluice gates.

S3. Experiment operation stage:

S3-1. A duration $T$ of an experiment system is determined according to the water and sediment incoming process of a certain requirement and in combination with related scales. $Q_{in}\sim t$ and $S_{in}\sim t$ relationships corresponding to the model are determined according to a set water and sediment incoming process of the prototype. A $Q_{out}\sim t$ relationship

is determined according to a sediment peak scheduling rule.

S3-2. An inflow rate is controlled according to a steady flow process, so that the corresponding flow rate is equal to a $Q_{in}$ value at an initial moment (i.e., the moment $t$=0). During the period, $S_{in}$=0 is kept and the water circulation of the experiment system starts to be carried out. After the water level in front of the dam reaches a $z$ value at the initial moment, water is released according to $Q_{out}$ at the initial moment, and at the same time, the experiment starts to be carried out.

S3-3. A flow rate control module and a sediment supply module are synchronously started up so as to generate water and sediment incoming conditions according to the $Q_{in}$~$t$ and $S_{in}$~$t$ relationships. A control unit is used to adjust the opening degree of each sluice gate of a water release unit, and water flow and sediment are released according to the $Q_{out}$~$t$ relationship. At the same time, measurement equipment is started up to measure water flow and sediment parameters;

S3-4. When $t$=$T$, water and sediment are stopped from supplying to the water-sediment experiment module, the water-sediment measurement is stopped, and the experiment ends.

S3-5. The sediment discharge ratio of the reservoir is calculated based on water-sediment data measured in the experiment. At the same time, a sediment discharge ratio parameter of the prototype is reversely calculated in combination with a time scale, a water level scale, the flow rate scale, and the sediment concentration scale.

## BRIEF DESCRIPTION OF THE DRAWINGS

Fig. 1 is a schematic diagram of an experiment simulation system in accordance with the present invention;

Fig. 2 is a schematic diagram of arrangement of a river reservoir section of a water-sediment experiment module and a dam body measurement device in accordance with the present invention;

Fig. 3 is a structural schematic diagram of model sand in accordance with the present invention;

Fig. 4 is a schematic diagram of a micro fluid density measurement device in accordance with the present invention;

Fig. 5 is a flow chart of an experiment method for reservoir sediment peak simulation in accordance with the present invention; and

Fig. 6 shows process curves of three typical flood peak and sediment peak prototypes simulated by an embodiment of the present invention.

Reference signs:

1-flow rate control module; 1.1-water storage tank; 1.2-water pump; 1.3-connecting section; 2-sediment supply module; 2.1-sediment feeder; 2.1.1-experimental sediment; 2.2-suspension mixing device; 22.1-pressure sensor; 2.2.2-thin plate grid; 2.2.3-variable frequency vibration motor; 2.3-flow guiding grille; 3-water-sediment experiment module; 3.1-river reservoir section; 3.2-dam body section; 3.2.1-water retaining unit; 3.2.2-control unit; 3.2.3-water release unit; 3.3-measurement equipment; 3.3.1-flow speed measurement probe; 3.3.2-water level measurement probe; 3.3.3-bed sediment measurement probe; 3.3.4-suspended sediment measurement probe; 3.3.4.1-serrated driver; 3.3.4.2-rigid thin sensing plate; 3.3.4.3-folded beam; 3.3.4.4-signal processing unit; 3.3.4.5-fixed serrated structure; 3.4.4.6-driving serrated structure; 4-discharged sediment collection module; 4.1-sediment retaining and water drainage device; 4.2-sediment collection and processing device; 4.3-sediment weighing device; and 4.4-water return pipeline.

## DETAILED DESCRIPTION

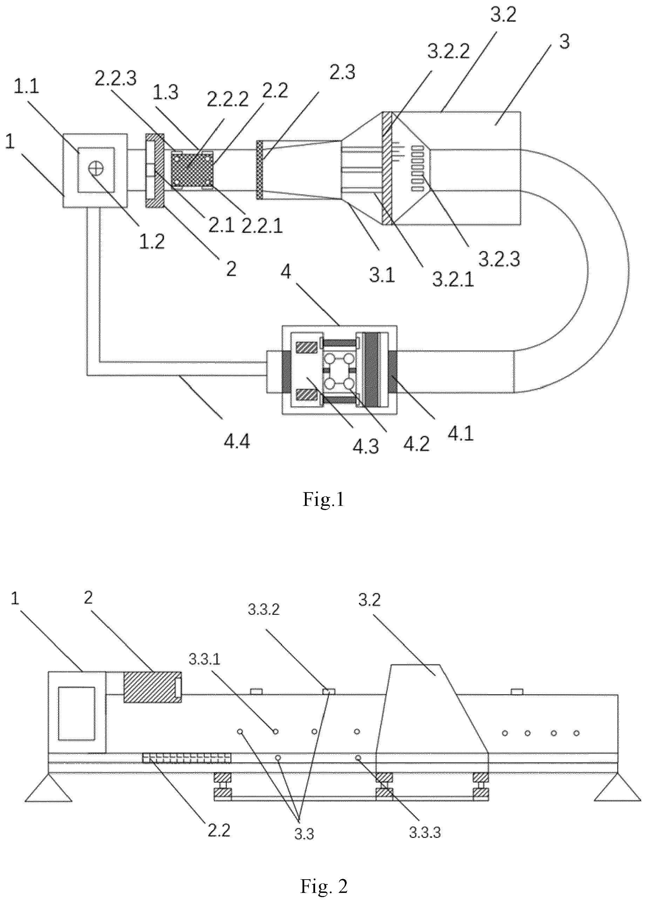

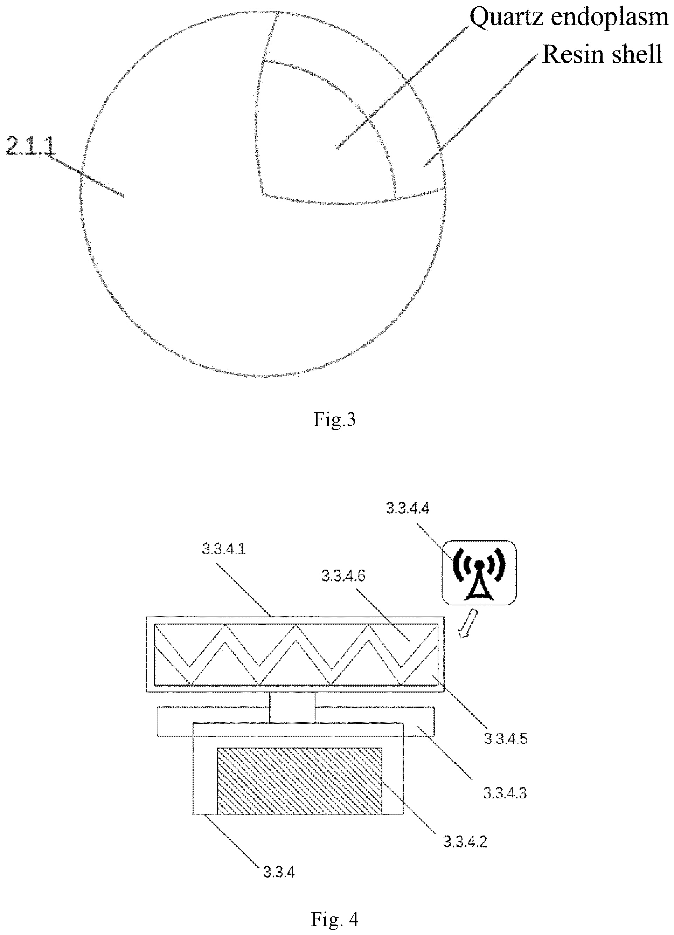

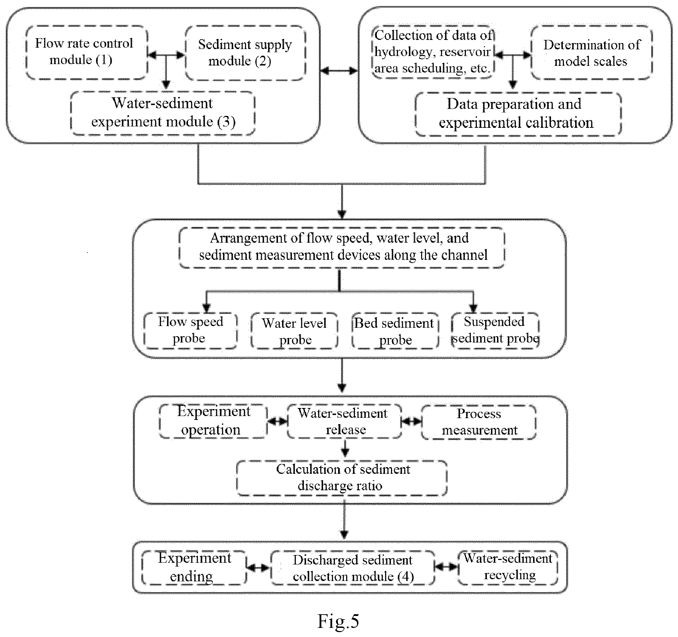

As shown in Fig. 1 to Fig. 6, the present invention adopts the following technical scheme: an experiment simulation system for reservoir sediment peak scheduling includes a flow rate control module 1, a sediment supply module 2, a water-sediment experiment module 3, and a discharged sediment collection module 4.

The flow rate control module 1 is configured to customize a flood flow process that meets experiment requirements, and includes a water storage tank 1.1, a water pump 1.2, and connecting sections 1.3. The water storage tank 1.1 is configured to store experimental water of which the capacity is not less than twice the water volume required for experiment. The water pump 1.2 is a Direct Current (DC) variable frequency water pump 1.2 and implements stepless linear adjustment of the pumping flow rate by adjusting the working frequency of a variable frequency motor. The connecting sections 1.3 are configured for hydraulic connection between equipment. The connecting section 1.3 between the water storage tank 1.1 and the water pump 1.2 is a pressure steel pipe, and the connecting section 1.3 between the water pump 1.2 and the downstream water-sediment experiment module 3 is a non-pressure open channel. The conveyance capacity of each connecting section 1.3 is not less than twice the maximum experimental flow rate.

the sediment supply module 2 is configured to set a sediment carrying flow that meets experiment requirements, and includes a sediment feeder 2.1, a suspension mixing device 2.2, and a flow guiding grille 2.3, wherein the sediment feeder 2.1 is located above the open-channel connecting section 1.3 and is configured to add experimental sediment 2.1.1 into the experimental water flow. The supply rate of the experimental sediment is controlled by dynamically adjusting the opening degree of the sediment feeder 2.1. The suspension mixing device 2.2 is located at the bottom of the open-channel connecting section and is configured to implement sufficient mixing of the experimental water flow and the experimental sediment in order to prevent the sediment from settling. The flow guiding grille 2.3 is located at the tail of the open-channel part connecting section 1.3 and is configured to eliminate large-scale vortices in the water flow.

the water-sediment experiment module 3 is configured to carry out a reservoir area sediment peak scheduling experiment, and includes a river reservoir section 3.1, a dam body section 3.2, and measurement equipment 3.3. The river reservoir section 3.1 is a scaled model of the natural river reservoir at the upstream of a dam and is integrally formed by a high-strength ABS material through 3D printing technique. The dam body section 3.2 is configured to simulate the dam body and spillway structure of the dam, including a water retaining unit 3.2.1, a control unit 3.2.2, and a water release unit 3.2.3. The control unit 3.2.2 is configured to control the opening and closing of the sluice gate of the water release unit 3.2.3 and control the opening degree of the sluice gate. The water release unit 3.2.3 includes a plurality of sluice gates and is configured to release the sediment carrying flow. The measurement equipment 3.3 is configured to measure water flow and sediment motion parameters of the experiment module.

The discharged sediment collection module 4 is configured for water-sediment separation and water-sediment recovery, including a sediment retaining and water drainage device 4.1, a sediment collection and processing device 4.2, a sediment weighing device 4.3, and a water return pipeline 4.4. The upstream of the sediment retaining and water drainage device 4.1 is connected with the water-sediment experiment module 3, and the sediment retaining and water drainage device 4.1 is configured to intercept and filter the sediment discharged from the reservoir and achieve water-sediment separation and clear water release. The sediment collection and processing device 4.2 is configured to collect the sediment released by the reservoir and carry out drying treatment. The sediment weighing device 4.3 is configured to weigh the dried sediment so as to calculate the sediment discharge ratio of the reservoir. The weighed dry sediment is replenished into the sediment feeder 2.1. The water return pipeline 4.4 connects the sediment retaining and water drainage device 4.1 and the water storage tank 1.1 and is configured to replenish the filtered clear water into the water storage tank 1.1 so as to form a water circulation system.

Further, in an optional embodiment of the present invention, the suspension mixing device 2.2 is located at the bottom of the open-channel connecting section 1.3 and includes a pressure sensor 2.2.1, a thin plate grid 2.2.2, and a variable frequency vibration motor 2.2.3. The pressure sensor 2.2.1 is configured to measure the bottom water pressure $p$ of the sediment carrying flow in real time. The fluid volume-weight ratio $y$ is calculated according to a formula $p = \gamma h$ in combination with the water depth $h$, and $y$ is positively correlated with the fluid sediment concentration. The mesh size of the thin plate grid 2.2.2 is 50 times the median diameter of the sediment. The variable frequency vibration motor 2.2.3 is configured to drive the thin plate grid 2.2.2 to take an up-and-down reciprocating micro vibration so as to promote suspension of the near-bottom sediment. The start-up condition and the vibration frequency calculation formula are as follows:

$$u_s = \beta f \sqrt{gh},$$

wherein, $u_s$ represents the start-up speed of model sand; $g$ represents the gravity acceleration; $f$ represents the vibration grid base frequency; and $\beta$ represents the frequency correction coefficient.

Further, in an optional embodiment of the present invention, experimental model sand 2.1.1 released by the sediment feeder 2.1 is made of a resin shell and quartz endoplasm and can be customized according to the sediment diameter and scale requirements of the experiment by adjusting the content of the quartz endoplasm and the size of the resin shells so as to meet the experiment requirements.

Further, in an optional embodiment of the present invention, the measurement equipment 3.3 includes a plurality of sets of flow speed measurement probes 3.3.1, water level measurement probes 3.3.2, bed sediment measurement probes 3.3.3, and suspended sediment measurement probes 3.3.4. The flow speed measurement probes are acoustic transit-time probes, which are evenly attached to wall surfaces on both sides along the river reservoir section 3.1. The flow speed is measured through the time difference between transmitting and receiving acoustic signals diagonally across the water flow. The water level measurement probes are ultrasonic echo probes arranged above the open-channel part connecting section 1.3 and the river reservoir section 3.1, and are configured to calculate the distance between a liquid surface and a gauging point according to the round-trip time of ultrasound between the gauging point and the liquid surface so as to deduce a real-time water level at the liquid surface. The bed sediment measurement probes are high-frequency ultrasonic probes, which are evenly attached to the bottom along the river reservoir section 3.1, and are configured to calculate the thickness of the bed sediment according to the time of the ultrasonic round trip from the gauging point to the water-sediment interface. Suspended sediment measurement is performed by the suspended sediment measurement probes 3.3.4 which are evenly arranged on the inner wall of the water-sediment experiment module 3 and are configured to monitor the suspended sediment concentration of the water column along the channel.

Further, in an optional embodiment of the present invention, the suspended sediment measurement probe 3.3.4 includes a serrated driver 3.3.4.1, a rigid thin sensing plate 3.3.4.2, a folded beam 3.3.4.3, and a signal processing unit 3.3.4.4. The serrated driver 3.3.4.1 is a capacitive driver including a fixed serrated structure 3.3.4.5 and a driving serrated structure 3.3.4.6. The fixed serrated structure is kept static while the driving serrated structure can freely move. The folded beam 3.3.4.3 is made of polycrystalline silicon and is used to support other structures. The signal processing unit 3.3.4.4 is configured to convert a current signal into sediment concentration data. When the experimental sediment carrying flow flows through a micro fluid density measurement device, a pressure drop exists between both ends of a micro passage, so that the rigid thin sensing plate 3.3.4.2 generates resonance oscillation. The inherent frequency generated by the rigid thin sensing plate 3.3.4.2 depends on the density of to-be-measured fluid, i.e., a greater density of a measured substance corresponds to a smaller inherent frequency. The capacitance between the fixed serrated structure 3.3.4.5 and the driving serrated structure 3.3.4.6 is changed by the resonance oscillation so as to generate an electric signal. The electric signal is converted into the suspended sediment concentration data by the signal processing unit 3.3.4.4, and the conversion coefficient needs to be quantitatively calibrated before the experiment.

An embodiment of the present invention further provides an experiment simulation method for reservoir sediment peak scheduling. The method above specifically includes the following steps:

S1. Equipment preparation stage: The model's horizontal scale $\lambda_l$ and vertical scale $\lambda_h$ is determined according to actual topographic data of a river channel and a reservoir. Preferably, 3D printing with ABS material is used to form a river reservoir section 3.1, and organic glass material is used to build a dam body section 3.2. Prior to the experiment, the model sand is customized to be stored in a sediment feeder 2.1 based on suspended load sediment data and sediment scale conditions. During the experiment, flow speed measurement probes 3.3.1, water level measurement probes 3.3.2, bed sediment measurement probes 3.3.2, and suspended sediment measurement probes 3.3.3 are installed along the channel to synchronously obtain the flow speed, water level, bottom sediment accumulation thickness, and suspended sediment concentration of the experimental water flow.

S2. Data preparation stage: According to a process sequence of flow rate, sediment concentration, and sediment transportation time at a hydrometric station at the upstream of a river channel and in combination with related scales, a process sequence of flow rate and sediment concentration input at an inlet of a water-sediment experiment module 3 is drafted. According to the model's horizontal scale $\lambda_l$ and vertical scale $\lambda_h$ and on the basis of a gravity similarity criterion, a flow speed scale is determined as $\lambda_U = \lambda_h^{0.5}$, a flow rate scale is determined as $\lambda_Q = \lambda_l \lambda_h^{1.5}$, a sediment settling velocity scale is determined as $\lambda_\omega = \lambda_h^{1.5} \lambda_l^{-1}$, and a sediment concentration scale is determined as $\lambda_S = \lambda_h^{0.5} \lambda_l^{0.92}$. According to a preset scheduling scheme of a prototype reservoir, a flow rate release process scheme for each sluice gate is drafted

The opening degree $e$ and the outflow rate $Q_{out}$ of a single sluice gate satisfying the following relationship:

$$Q_{\text{out}} = \left(0.6 - 0.176\frac{e}{H}\right) \cdot b \cdot e\sqrt{2gH} \, ,$$

wherein, e represents the opening degree of the sluice gate; H represents the water head at the sluice hole, i.e., a difference value between the water level z in front of the dam and the floor elevation; and b represents the sluice hole width, and the total reservoir outflow rate is obtained by accumulating the outflow rates of all the respective sluice gates.

S3. Experiment operation stage:

S3-1. A duration T of an experiment system is determined according to the water and sediment incoming process of a certain requirement and in combination with related scales. $Q_{in}\sim t$ and $S_{in}\sim t$ relationships corresponding to the model is determined according to a set water and sediment incoming process of the prototype. A $Q_{out}\sim t$ relationship is determined according to a sediment peak scheduling rule.

S3-2. An inflow flow rate is controlled according to a steady flow process, so that the corresponding flow rate is equal to a $Q_{in}$ value at an initial moment (i.e., the moment t=0). During the period, $S_{in}$=0 is kept, and the water circulation of the experiment system starts to be carried out. After the water level in front of the dam reaches a z value at the initial moment, water is released according to $Q_{out}$ at the initial moment, and at the same time, the experiment starts to be carried out.

S3-3. A flow rate control module 1 and a sediment supply module 2 are synchronously started up so as to generate water and sediment incoming conditions according to the $Q_{in}\sim t$ and $S_{in}\sim t$ relationships. A control unit is used to adjust the opening degree of each sluice gate of a water release unit 3.2., and water flow and sediment are released according to the $Q_{out}\sim t$ relationship. At the same time, measurement equipment 3.3 is started up to measure water flow and sediment parameters;

S3-4. When $t=T$, water and sediment are stopped from supplying to the water-sediment experiment module 3, water-sediment measurement is stopped, and the experiment ends.

S3-5. The sediment discharge ratio of the reservoir is calculated based on water-sediment data measured in the experiment. At the same time, the sediment concentration scale, a sediment discharge ratio parameter of the prototype is reversely calculated in combination with a time scale, a water level scale, the flow rate scale.

Specifically, by taking a certain river channel type reservoir as an example, the reservoir accounts for 11 flood release and sediment discharge sluice gates in total, the sluice gates each have a width of 7 m and a height of 9 m, and each sluice gate has the release capacity of 2,205 m³/s. The dam height is 185 m, a river channel in front of the dam has a width of about 2.8 km, the water depth is 100 m, the sediment peak concentration of incoming flow is 1.75 kg/m³, the flood peak flow rate is 52,500 m³/s, and the suspended sediment diameter is about 0.5 to 3 mm. According to a calculation formula of various scales, a length scale is drafted as $\lambda_l$=0.01 and $\lambda_h$=0.005, a flow speed scale is drafted as $\lambda_u$=0.07, a flow rate scale is drafted as $\lambda_Q$=3.5 × 10⁻⁶, a sediment settling velocity scale is drafted as $\lambda_\omega$=0.035, and a sediment concentration scale is drafted as $\lambda_S$=0.001. A flood peak flow rate process that meets experiment requirements is customized by a flow rate control module 1.

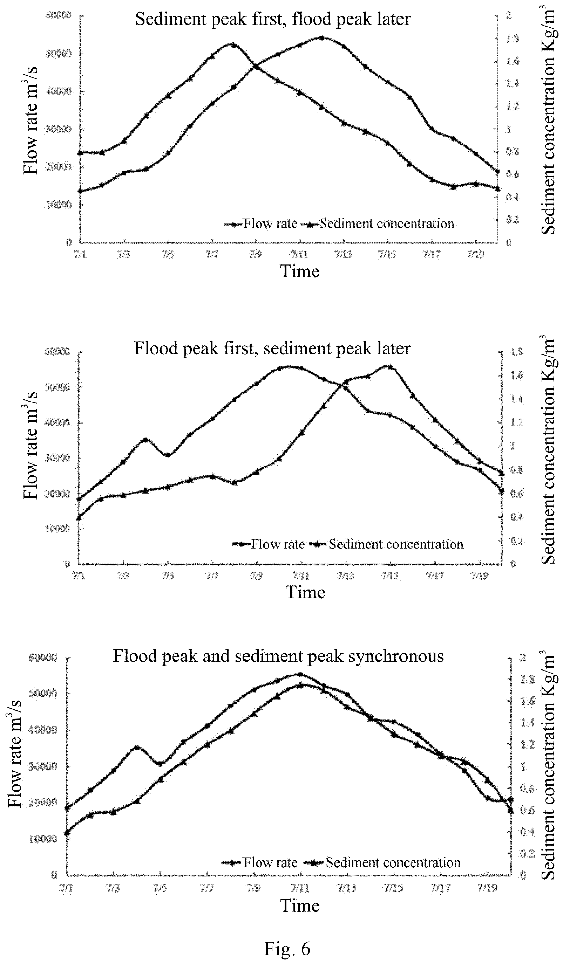

A river channel section topography is determined according to actually measured topographic data, 3D printing with ABS material is used to form a river reservoir section 3.1, organic glass material is sued to build a dam body section 3.2, and part of parameters are as shown in Table 1. According to a preset scheduling scheme of a prototype reservoir, a flow rate release process scheme for each sluice gate is drafted., model sand is customized to be stored in a sediment feeder 2.1 based on suspended load sediment data and sediment scale conditions. According to flood peak and sediment peak data of the prototype as shown in Fig. 6 and in combination with scales, flow rate and sediment concentration processes ($Q_{in}\sim t$ and $S_{in}\sim t$ ) are generated, a flood peak and a sediment peak exit from the reservoir asynchronously, and three typical sediment scheduling modes, i.e., "flood peak first, sediment peak later", "flood peak and sediment peak synchronous", and "sediment peak first, flood peak later" are respectively simulated as operating conditions. The flow rate control module 1 and a sediment supply module 2 are sequentially started up, a water release unit 3.2.3 is controlled according to an opening and closing log of the sluice gates under each operating condition, and water-sediment recycling is achieved by a discharged sediment collection module 4.

Table 1 Parameter Values of Experiment System

| Number | Parameter | Value | Number | Parameter | Value |
|--------|-----------|-------|--------|-----------|-------|
| 1 | $b$ | 0.07 m | 4 | $u_s$ | 0.39 m/s |
| 2 | $h$ | 0.5 m | 5 | $\beta$ | 0.007 |
| 3 | g | 9.8 m/s² | 6 | $f$ | 25 |

A set of measurement device is arranged at an equal interval of 5cm at the river channel section along the flow direction. Each set of measurement device includes a pair of flow rate measurement probes (3.3.1), one water level measurement probe (3.3.2), one bed sediment measurement probe (3.3.3), and a pair of suspended sediment measurement probes (3.3.4), which are configured for carrying out synchronous measurement on the incoming water flow speed, water level, bottom sediment thickness, and suspended sediment concentration. The dried outgoing sediment concentration is weighed in combination with a sediment weighing device (4.3), and the sediment discharge ratio is calculated by selecting the following formula:

$$s_c / s_r = 2.572 e^{-496.546 \frac{u_s}{0.5(Q_{rs} + Q_{cs})}},$$

wherein, $s_c$ represents the incoming sediment concentration at the sediment peak, $s_r$ represents the outgoing sediment concentration at the sediment peak, $Q_{rs}$ represents the incoming flow rate at the sediment peak, and $Q_{cs}$ represents the total outgoing flow rate at the sediment peak. By simulation, measurement, and calculation, it is obtained that the sediment discharge ratio under the operating condition A (sediment peak first, flood peak later) is 38.6%, the sediment discharge ratio under the operating condition B (sediment peak and flood peak synchronous) is 40.4%, and the sediment discharge ratio under the operating condition C (flood peak first, sediment peak later) is 32.7%.

**Claims**

1. An experiment simulation system for reservoir sediment peak scheduling, comprising a flow rate control module (1), a sediment supply module (2), a water-sediment experiment module (3), and a discharged sediment collection module (4), wherein

   the flow rate control module (1) is configured to customize a flood flow process that meets experiment requirements, and comprises a water storage tank (1.1), a water pump (1.2), and connecting sections (1.3), wherein the water storage tank (1.1) is configured to store experimental water of which the capacity is not less than twice the water volume required for the experiment; the water pump (1.2) is a Direct Current (DC) variable frequency water pump (1.2) and implements stepless linear adjustment of the pumping flow rate by adjusting the working frequency of a variable frequency motor; the connecting sections (1.3) are configured for hydraulic connection between equipment; the connecting section (1.3) between the water storage tank (1.1) and the water pump (1.2) is a pressure steel pipe, and the connecting section (1.3) between the water pump (1.2) and the downstream water-sediment experiment module (3) is a non-pressure open channel; and the conveyance capacity of each connecting section (1.3) is not less than twice the maximum experimental flow rate;
   the sediment supply module (2) is configured to set a sediment carrying flow that meets experiment requirements, and comprises a sediment feeder (2.1), a suspension mixing device (2.2), and a flow guiding grille (2.3), wherein the sediment feeder (2.1) is located above the open-channel connecting section (1.3) and is configured to add experimental sediment (2.1.1) into the experimental water flow, and the supply rate of the experimental sediment is controlled by dynamically adjusting the opening degree of the sediment feeder (2.1); the suspension mixing device (2.2) is located at the bottom of the open-channel connecting section and is configured to implement sufficient mixing of the experimental water flow and the experimental sediment in order to prevent the sediment from settling; the flow guiding grille (2.3) is located at the tail of the open-channel connecting section (1.3) and is configured to eliminate large-scale vortices in the water flow;
   the water-sediment experiment module (3) is configured to carry out a reservoir area sediment peak scheduling experiment, and comprises a river reservoir section (3.1), a dam body section (3.2), and measurement equipment (3.3), wherein the river reservoir section (3.1) is a scaled model of the natural river reservoir at the upstream of the dam and is integrally formed by a high-strength ABS material through 3D printing technique; the dam body section (3.2) is configured to simulate a dam body and spillway structure of the dam, comprising a water retaining unit (3.2.1), a control unit (3.2.2), and a water release unit (3.2.3); the control unit (3.2.2) is configured to control the opening and closing of the sluice gate of the water release unit (3.2.3) and control the opening degree of the sluice gate; the water release unit (3.2.3) comprises a plurality of sluice gates and is configured to release the sediment carrying flow; the measurement equipment (3.3) is configured to measure water flow and sediment motion parameters of the experiment module; and
   the discharged sediment collection module (4) is configured for water-sediment separation and water-sediment recovery, comprising a sediment retaining and water drainage device (4.1), a sediment collection and processing device (4.2), a sediment weighing device (4.3), and a water return pipeline (4.4), wherein the upstream of the sediment retaining and water drainage device (4.1) is connected with the water-sediment experiment module (3), and the sediment retaining and water drainage device (4.1) is configured to intercept and filter the sediment discharged from the reservoir and achieve water-sediment separation and clear water release; the sediment collection and processing device (4.2) is configured to collect the sediment released by the reservoir and carry out drying treatment; the sediment weighing device (4.3) is configured to weigh the dried sediment so as to calculate the sediment discharge ratio of the reservoir, and the weighed dry sediment is replenished into the sediment feeder (2.1); and the water return pipeline (4.4) connects the sediment retaining and water drainage device (4.1) and the water storage tank (1.1) and is configured to replenish the filtered clear water into the water storage tank (1.1) so as to form a water circulation system.

2. The experiment simulation system for reservoir sediment peak scheduling of claim 1, wherein the suspension mixing device (2.2) is located at the bottom of the open-channel connecting section (1.3) and comprises a pressure sensor (2.2.1), a thin plate grid (2.2.2), and a variable frequency vibration motor (2.2.3), wherein the pressure sensor (2.2.1) is configured to measure the bottom water pressure p of the sediment carrying flow in real time, the fluid volume-weight ratio $y$ is calculated according to a formula $p=yh$ in combination with the water depth $h$, and $y$ is positively correlated with the fluid sediment concentration; the mesh size of the thin plate grid (2.2.2) is 50 times the median diameter of the sediment; the variable frequency vibration motor (2.2.3) is configured to drive the thin plate grid (2.2.2) to take an up-and-down reciprocating micro vibration so as to promote suspension of the near-bottom sediment; and the start-up condition and the vibration frequency calculation formula are as follows:

$$u_s = \beta f \sqrt{gh},$$

wherein, $u_s$ represents the start-up speed of model sand; g represents the gravity acceleration; $f$ represents the vibration grid base frequency; and $\beta$ represents the frequency correction coefficient.

3. The experiment simulation system for reservoir sediment peak scheduling of claim 1, wherein experimental model sand (2.1.1) released by the sediment feeder (2.1) is made of a resin shell and quartz endoplasm and can be customized according to the sediment diameter and scale requirements of the experiment by adjusting the content of the quartz endoplasm and the size of the resin shells so as to meet the experiment requirements.

4. The experiment simulation system for reservoir sediment peak scheduling of claim 1, wherein the measurement equipment (3.3) comprises a plurality of sets of flow speed measurement probes (3.3.1), water level measurement probes (3.3.2), bed sediment measurement probes (3.3.3), and suspended sediment measurement probes (3.3.4), wherein the flow speed measurement probes are acoustic transit-time probes, which are evenly attached to wall surfaces on both sides along the river reservoir section (3.1); the flow speed is measured through the time difference between transmitting and receiving acoustic signals diagonally across the water flow; the water level measurement probes are ultrasonic echo probes arranged above the open-channel connecting section (1.3) and the river reservoir section (3.1), and are configured to calculate the distance between a liquid surface and a gauging point according to the round-trip time of ultrasound between the gauging point and the liquid surface so as to deduce a real-time water level at the liquid surface; the bed sediment measurement probes are high-frequency ultrasonic probes, which are evenly attached to the bottom surface along the river reservoir section (3.1), and are configured to calculate the thickness of the bed sediment according to the round-trip time according to the time of the ultrasonic round trip from the gauging point to the water-sediment interface; and suspended sediment measurement is performed by the suspended sediment measurement probes (3.3.4) which are evenly arranged on an inner wall of the water-sediment experiment module (3) and are configured to monitor the suspended sediment concentration of the water column along the channel.

5. The experiment simulation system for reservoir sediment peak scheduling of claim 4, wherein the suspended sediment measurement probe (3.3.4) comprises a serrated driver (3.3.4.1), a rigid thin sensing plate (3.3.4.2), a folded beam (3.3.4.3), and a signal processing unit (3.3.4.4), wherein the serrated driver (3.3.4.1) is a capacitive driver including a fixed serrated structure (3.3.4.5) and a driving serrated structure (3.3.4.6), and the fixed serrated structure is kept static while the driving serrated structure can freely move; the folded beam (3.3.4.3) is made of polycrystalline silicon and is configured to support other structures; the signal processing unit (3.3.4.4) is configured to convert a current signal into sediment concentration data; when the experimental sediment carrying flow flows through a micro fluid density measurement device, a pressure drop exists between both ends of a micro passage, so that the rigid thin sensing plate (3.3.4.2) generates resonance oscillation; the inherent frequency generated by the rigid thin sensing plate (3.3.4.2) depends on the density of to-be-measured fluid, i.e., a greater density of a measured substance corresponds to a smaller inherent frequency; and the capacitance between the fixed serrated structure (3.3.4.5) and the driving serrated structure (3.3.4.6) is changed by the resonance oscillation so as to generate an electric signal; the electric signal is converted into the suspended sediment concentration data by the signal processing unit (3.3.4.4), and the conversion coefficient needs to be quantitatively calibrated before the experiment.

6. An experiment simulation method for reservoir sediment peak scheduling, according to claim 1, specifically comprising the following steps:

S1. equipment preparation stage: determining model's horizontal scale $\lambda_l$ and a vertical scale $\lambda_h$ according to actual topographic data of a river channel and a reservoir, using 3D printing with ABS material to form a river reservoir section (3.1), and using organic glass material to build a dam body section (3.2); prior to the experiment, based on suspended load sediment data and sediment scale conditions, customizing model sand to be stored in a sediment feeder (2.1); and during the experiment, installing flow speed measurement probes (3.3.1), water level measurement probes (3.3.2), bed sediment measurement probes (3.3.2), and suspended sediment measurement probes (3.3.3) along the channel to synchronously obtain flow speed, water level, bottom sediment accumulation thickness, and suspended sediment concentration of the experimental water flow;

S2: data preparation stage: according to a process sequence of flow rate, sediment concentration, and sediment transportation time at a hydrometric station at the upstream of a river channel and in combination with related scales, drafting a process sequence of flow rate and sediment concentration input at an inlet of a water-sediment experiment module (3); according to the model's horizontal scale $\lambda_l$ and the vertical scale $\lambda_h$ and a gravity similarity criterion, determining a flow speed scale as $\lambda_U = \lambda_h^{0.5}$, determining a flow rate scale as $\lambda_Q = \lambda_l \lambda_h^{1.5}$, determining a sediment settling velocity scale as $\lambda\omega = \lambda_h^{1.5}\lambda_l^{-1}$, and determining a sediment concentration scale as $\lambda_S = \lambda_h^{0.5}\lambda_l^{0.92}$; and according to a preset scheduling scheme of a prototype reservoir, drafting a flow rate release process scheme for each sluice gate, the opening degree e and the outflow rate $Q_{out}$ of a single sluice gate satisfying the following relationship:

$$Q_{\text{out}} = \left( 0.6 - 0.176\frac{e}{H} \right) \cdot b \cdot e\sqrt{2gH} \,,$$

wherein, e represents the opening degree of the sluice gate; H represents the water head at the sluice hole, i.e., a difference value between the water level z in front of the dam and the floor elevation; and b represents the sluice hole width, and the total reservoir outflow rate is obtained by accumulating the outflow rates of all the respective sluice gates; and

S3: experiment operation stage:

S3-1: according to the water and sediment incoming process of a certain requirement and in combination with related scales, determining a duration T of an experiment system; according to a set water and sediment incoming process of the prototype, determining $Q_{in}\sim t$ and $S_{in}\sim t$ relationships corresponding to the model; and according to a sediment peak scheduling rule, determining a $Q_{out}\sim t$ relationship;

S3-2: controlling an inflow rate according to a steady flow process, so that the corresponding flow rate is equal to a $Q_{in}$ value at an initial moment (i.e., the moment t=0); during the period, keeping $S_{in}=0$ and starting to carry out water circulation of the experiment system; and after the water level in front of the dam reaches a z value at the initial moment, releasing water according to $Q_{out}$ at the initial moment, and at the same time, starting to carry out the experiment; and

S3-3: synchronously starting up an inlet flow rate control module (1) and a sediment supply module (2), enabling the inlet flow rate control module (1) and the sediment supply module (2) to generate water and sediment incoming conditions according to the $Q_{in}\sim t$ and $S_{in}\sim t$ relationships, adjusting the opening degree of each sluice gate of a water release unit (3.2.3) by using a control unit (3.2.2), and carrying out water flow and sediment release according to the $Q_{out}\sim t$ relationship; and at the same time, starting up measurement equipment (3.3) to carry out the measurement of water flow and sediment parameters;

S3-4: when $t=T,$ stopping water supply and sediment supply to the water-sediment experiment module (3) and stopping water-sediment measurement, and ending the experiment; and

S3-5: based on water-sediment data measured in the experiment, calculating the sediment discharge ratio of the reservoir; and at the same time, in combination with a time scale, a water level scale, the flow rate scale, and the sediment concentration scale, reversely calculating a sediment discharge ratio parameter of the prototype.

**Patentansprüche**

1. Experiment-Simulationssystem für die Planung von Sedimentspitzen in einem Reservoir, umfassend ein Modul (1) zur Steuerung der Durchflussrate, ein Modul (2) zur Zufuhr von Sedimenten, ein Wasser-Sediment-Experimentmodul (3) und ein Modul (4) zum Sammeln von ausgetragenen Sedimenten umfasst,

wobei das Modul (1) zur Steuerung der Durchflussrate so konfiguriert ist, dass es einen Hochwasserprozess anpasst, der die Anforderungen des Experiments erfüllt, und einen Wasserspeichertank (1.1), eine Wasserpumpe (1.2) und Verbindungsabschnitte (1.3) umfasst, wobei der Wasserspeichertank (1.1) so konfiguriert ist, dass er experimentelles Wasser speichert, dessen Kapazität nicht weniger als das Doppelte des für das Experiment erforderlichen Wasservolumens beträgt; wobei die Wasserpumpe (1.2) eine Gleichstrom-(DC)-Wasserpumpe (1.2) ist und eine stufenlose lineare Einstellung der Fördermenge durch Einstellung der Arbeitsfrequenz eines frequenzvariablen Motors ermöglicht; wobei die Verbindungsabschnitte (1.3) für die hydraulische Verbindung zwischen den Geräten ausgelegt sind; wobei der Verbindungsabschnitt (1.3) zwischen dem Wasserspeichertank (1.1) und der Wasserpumpe (1.2) ein Druckstahlrohr ist, und wobei der Verbindungsabschnitt (1.3) zwischen der Wasserpumpe (1.2) und dem stromabwärts gelegenen Wasser-Sediment-Experimentiermodul (3) ein druckloser offener Kanal ist; und wobei die Förderkapazität jedes Verbindungsabschnitts (1.3) nicht geringer als das Doppelte der maximalen experimentellen Durchflussrate ist;

wobei das Modul (2) zur Zufuhr von Sedimenten so konfiguriert ist, dass es eine sedimentführende Strömung einstellt, die die Anforderungen des Experiments erfüllt, und eine Sedimentzufuhrvorrichtung (2.1), eine Suspensionsmischvorrichtung (2.2) und ein Strömungsführungsgitter (2.3) umfasst, wobei die Sedimentzufuhrvorrichtung (2.1) oberhalb des Verbindungsabschnitts (1.3) mit offenem Kanal angeordnet ist und so konfiguriert ist, dass sie experimentelles Sediment (2.1.1) in den experimentellen Wasserstrom hinzufügt, und die Zufuhrrate des experimentellen Sediments durch dynamisches Einstellen des Öffnungsgrads der Sedimentzufuhrvorrichtung (2.1) gesteuert wird; wobei sich die Suspensionsmischvorrichtung (2.2) am Boden des Verbindungsabschnitts mit offenem Kanal befindet und so konfiguriert ist, dass sie eine ausreichende Durchmischung des experimentellen Wasserflusses und des experimentellen Sediments bewirkt,um ein Absetzen des Sediments zu verhindern; wobei sich das Strömungsführungsgitter (2.3) am Ende des Verbindungsabschnitts mit offenem Kanal (1.3) befindet und so konfiguriert ist, dass es großflächige Wirbel im Wasserstrom eliminiert;

wobei das Wasser-Sediment-Experimentmodul (3) so konfiguriert ist, dass es ein Experiment eines Planungs von Sedimentspitzen in einem Reservoirgebiet durchführt, und einen Flussreservoirabschnitt (3.1), einen Dammkörperabschnitt (3.2) und eine Messausrüstung (3.3) umfasst, wobei der Flussreservoirabschnitt (3.1) ein maßstabsgetreues Modell des natürlichen Flussreservoirs stromaufwärts des Damms ist und integral aus einem hochfesten ABS-Material durch 3D-Drucktechnik gebildet wird; wobei der Dammkörperabschnitt (3.2) so konfiguriert ist, dass er einen Dammkörper und eine Überlaufstruktur des Damms simuliert, und eine Wasserrückhalteeinheit (3.2.1), eine Steuereinheit (3.2.2) und eine Wasserabgabeeinheit (3.2.3) umfasst; wobei die Steuereinheit (3.2.2) so konfiguriert ist, dass sie das Öffnen und Schließen des Schleusentors der Wasserabgabeeinheit (3.2.3) steuert und den Öffnungsgrad des Schleusentors steuert; wobei die Wasserabgabeeinheit (3.2.3) eine Vielzahl von Schleusentoren umfasst und so konfiguriert ist, dass sie die sedimentführenden Strömung freigibt; wobei die Messausrüstung (3.3) so konfiguriert ist, dass sie Wasserstrom und Sedimentbewegungsparameter des Experimentmoduls misst; und

wobei das Modul (4) zum Sammeln von ausgetragenen Sedimenten zur Wasser-Sediment-Trennung und Wasser-Sediment-Rückgewinnung konfiguriert ist und eine Sedimentrückhalte- und Wasserdrainagevorrichtung (4.1), eine Sedimentsammel- und -verarbeitungsvorrichtung (4.2), eine Sedimentwiegevorrichtung (4.3) und eine Wasserrückführleitung (4.4) umfasst, wobei die stromaufwärts gelegene Sedimentrückhalte- und Wasserdrainagevorrichtung (4.1) mit dem Wasser-Sediment-Experimentmodul (3) verbunden ist und die Sedimentrückhalte- und Wasserdrainagevorrichtung (4.1) dazu konfiguriert ist, das aus dem Reservoir abgeflossene Sediment abzufangen und zu filtern und eine Wasser-Sediment-Rückführung zu erreichen, wobei die Sedimentsammel- und -verarbeitungsvorrichtung (4.2) so konfiguriert ist, dass sie das vom Reservoir abgegebene Sediment sammelt und eine Trocknungsbehandlung durchführt; wobei die Sedimentwiegevorrichtung (4.3) so konfiguriert ist, dass sie das getrocknete Sediment wiegt, um das Sedimentabflussverhältnis des Reservoirs zu berechnen, wobei das gewogene trockene Sediment in die Sedimentzufuhr (2.1) nachgefüllt wird; und wobei die Wasserrückführleitung (4.4) die Sedimentrückhalte- und Wasserdrainagevorrichtung (4.1) und den Wasserspeichertank (1.1) verbindet und so konfiguriert ist, dass sie das gefilterte klare Wasser in den Wasserspeichertank (1.1) nachfüllt, um ein Wasserkreislaufsystem zu bilden.

2. Experiment-Simulationssystem für die Planung von Sedimentspitzen in einem Reservoir nach Anspruch 1, wobei die Suspensionsmischvorrichtung (2.2) am Boden des Verbindungsabschnitts (1.3) mit offenem Kanal angeordnet ist und einen Drucksensor (2.2.1), ein dünnes Plattengitter (2.2.2) und einen Vibrationsmotor (2.2.3) mit variabler Frequenz umfasst, wobei der Drucksensor (2.2.1) so konfiguriert ist, dass er den Bodenwasserdruck $p$ der sedimentführenden Strömung in Echtzeit misst, wobei das Fluidvolumen-Gewichts-Verhältnis $y$ gemäß einer Formel $p=\gamma h$ in Kombination mit der Wassertiefe $h$ berechnet wird und $\gamma$ positiv mit der Fluidsedimentkonzentration korreliert ist; wobei die Maschengröße des dünnen Plattengitters (2.2.2) das 50-fache des mittleren Durchmessers des Sediments beträgt; wobei der Vibrationsmotor (2.2.3) mit variabler Frequenz so konfiguriert ist, dass er das dünne Plattengitter (2.2.2) antreibt, um eine auf- und abschwingende Mikrovibration auszuführen, um die Suspension des bodennahen Sediments zu fördern; und wobei die Startbedingung und die Formel zur Berechnung der Vibrationsfrequenz lauten wie folgt:

$$u_s = \beta f \sqrt{gh},$$

wobei $u_s$ für die Anlaufgeschwindigkeit des Modellsandes, g für die Erdbeschleunigung, f für die Grundfrequenz des Schwingungsgitters und $\beta$ für den Frequenzkorrekturkoeffizienten steht.

3. Experiment-Simulationssystem für die Planung von Sedimentspitzen in einem Reservoir nach Anspruch 1, wobei der von der Sedimentzufuhrvorrichtung (2.1) freigesetzte experimentelles Sediment (2.1.1) aus einer Harzschale und Quarz-Endoplasma besteht und entsprechend dem Sedimentdurchmesser und den Skalenanforderungen des Experiments angepasst werden kann, indem der Gehalt des Quarz-Endoplasmas und die Größe der Harzschalen so eingestellt werden, dass sie den Anforderungen des Experiments entsprechen.

4. Experiment-Simulationssystem für die Planung von Sedimentspitzen in einem Reservoir nach Anspruch 1, wobei die Messausrüstung (3.3) eine Vielzahl von Sätzen von Sonden zur Messung der Strömungsgeschwindigkeit (3.3.1), Sonden zur Messung des Wasserstandes (3.3.2), Sonden zur Messung von Bettsediment (3.3.3) und Messsonden für suspendierte Sedimente (3.3.4) umfasst, wobei die Sonden zur Messung der Strömungsgeschwindigkeit akustische Laufzeitsonden sind, die gleichmäßig an den Wandoberflächen auf beiden Seiten entlang des Flussreservoirabschnitts (3.1) angebracht sind; wobei die Flussreservoirabschnitt durch die Zeitdifferenz zwischen dem Senden und Empfangen von akustischen Signalen diagonal über den Wasserfluss gemessen wird; wobei die Sonden zur Messung des Wasserstands sind Ultraschallechosonden, die oberhalb des Verbindungsabschnitts (1.3) mit offenem Kanal und des Flussreservoirabschnitts (3.1) angeordnet sind und so konfiguriert sind, dass sie den Abstand zwischen einer Flüssigkeitsoberfläche und einem Messpunkt entsprechend der Umlaufzeit des Ultraschalls zwischen dem Messpunkt und der Flüssigkeitsoberfläche berechnen, um einen Echtzeit-Wasserstand an der Flüssigkeitsoberfläche abzuleiten; wobei die Sonden zur Messung von Bettsediment Hochfrequenz-Ultraschallsonden sind, die gleichmäßig an der Bodenoberfläche entlang des Flussreservoirabschnitts (3.1) angebracht sind und so konfiguriert sind, dass sie die Dicke des Bettsediments entsprechend der Umlaufzeit gemäß der Zeit des Ultraschallumlaufs vom Messpunkt zur Wasser-Sediment-Grenzfläche berechnen; und wobei die Messung des suspendierten Sediments durch die Messsonde für suspendierte Sedimente (3.3.4) durchgeführt wird, die gleichmäßig an einer Innenwand des Wasser-Sediment-Experimentmoduls (3) angeordnet sind und so konfiguriert sind, dass sie die Konzentration des suspendierten Sediments in der Wassersäule entlang des Kanals überwachen.

5. Experiment-Simulationssystem für die Planung von Sedimentspitzen in einem Reservoir nach Anspruch 4, wobei die Messsonde für suspendierte Sedimente (3.3.4) einen gezackten Treiber (3.3.4.1), eine starre, dünne Messplatte (3.3.4.2), einen gefalteten Träger (3.3.4.3) und eine Signalverarbeitungseinheit (3.3.4.4), wobei der gezackte Treiber (3.3.4.1) ein kapazitiver Treiber ist, der eine feststehende gezackte Struktur (3.3.4.5) und eine antreibende gezackte Struktur (3.3.4.6) enthält, und wobei die feststehende gezackte Struktur statisch gehalten wird, während die antreibende gezackte Struktur sich frei bewegen kann; wobei der gefaltete Träger (3.3.4.3) aus polykristallinem Silizium besteht und so konfiguriert ist, dass er andere Strukturen trägt; wobei die Signalverarbeitungseinheit (3.3.4.4) ist so konfiguriert, dass sie ein Stromsignal in Sedimentkonzentrationsdaten umwandelt; wenn die experimentelle sedimentführende Strömung durch eine Mikrofluiddichtemessvorrichtung fließt, besteht ein Druckabfall zwischen beiden Enden eines Mikrodurchgangs, so dass die starre dünne Messplatte (3.3.4.2) eine Resonanzschwingung erzeugt; wobei die von der starren dünnen Messplatte (3.3.4.2) erzeugte Eigenfrequenz von der Dichte der zu messenden Flüssigkeit abhängt, d.h., eine größere Dichte einer zu messenden Substanz entspricht einer kleineren Eigenfrequenz; und wobei die Kapazität zwischen der feststehende gezackten Struktur (3.3.4.5) und der antreibenden gezackten Struktur (3.3.4.6) durch die Resonanzschwingung verändert wird, um ein elektrisches Signal zu erzeugen; wobei das elektrische Signal von der Signalverarbeitungseinheit (3.3.4.4) in die Daten der Konzentration der suspendierten Sedimente umgewandelt wird, und wobei der Umwandlungskoeffizient muss vor dem Experiment quantitativ kalibriert werden.

6. Experiment-Simulationsverfahren für die Planung von Sedimentspitzen in einem Reservoir nach Anspruch 1, das insbesondere die folgenden Schritte umfasst:

**EP 4 216 197 B1**

S1.Vorbereitungsphase der Ausrüstung: Bestimmung des horizontalen Maßstabs $\lambda_l$ und des vertikalen Maßstabs $\lambda_h$ des Modells entsprechend den tatsächlichen topografischen Daten eines Flusskanals und eines Stausees, Verwendung von 3D-Druck mit ABS-Material, um einen Flussreservoirabschnitt (3.1) zu formen, und Verwendung von organischem Glasmaterial, um einen Dammkörperabschnitt (3.2) zu bauen; vor dem Experiment, basierend auf den Sedimentdaten der suspendierten Last und den Bedingungen der Sedimentskala, Anpassung des Modellsandes, der in einer Sedimentzufuhrvorrichtung (2.1) gelagert werden soll; und Installierung von Sonden zur Messung der Strömungsgeschwindigkeit (3.3.1), des Wasserstandes (3.3.2), des Wasserstandes (3.3.2) und des Bettsediments (3.3.3) entlang des Kanals während des Experiments, um synchron die Strömungsgeschwindigkeit, den Wasserstand, die Dicke der Sohlensedimente und die Konzentration der Schwebstoffe des experimentellen Wasserflusses zu ermitteln;

S2: Datenaufbereitungsstufe: gemäß einer Prozesssequenz der Durchflussrate, der Sedimentkonzentration und der Sedimenttransportzeit an einer hydrometrischen Station stromaufwärts eines Flusskanals und in Kombination mit verwandten Skalen, Entwurf einer Prozesssequenz der Durchflussrate und der Sedimentkonzentration, die an einem Einlass eines Wasser-Sediment-Experimentmoduls (3) eingegeben wird; gemäß der horizontalen Skala des Modells $\lambda_l$ und der vertikalen Skala $\lambda_h$ und einem Schwerkraftähnlichkeitskriterium, Bestimmung einer Durchflussratekala als $\lambda_U = \lambda_h^{0.5}$, Bestimmung einer Durchflussratekala als $\lambda_Q = \lambda_l \lambda_h^{1.5}$, Bestimmung einer Sedimentabsetzgeschwindigkeitsskala als $\lambda_\omega = \lambda_h^{1.5} \lambda_l^{-1}$ und Bestimmung einer Sedimentkonzentrationsskala als $\lambda_S = \lambda_h^{0.5} \lambda_l^{0.92}$; und gemäß einem voreingestellten Planungsschema eines Prototyp-Reservoirs, Entwerfen eines Durchflussfreigabe-Prozessschemas für jedes Schleusentor, wobei der Öffnungsgrad $e$ und die Ausflussrate $Q_{out}$ eines einzelnen Schleusentors die folgende Beziehung erfüllen:

$$Q_{out} = \left( 0.6 - 0.176\frac{e}{H} \right) \cdot b \cdot e\sqrt{2gH} \quad ,$$

wobei $e$ den Öffnungsgrad des Schleusentors darstellt; $H$ die Wassersäule am Schleusenloch darstellt, d.h.einen Differenzwert zwischen dem Wasserstand $z$ vor dem Damm und der Bodenhöhe; und $b$ die Breite des Schleusenlochs darstellt, und die Gesamtabflussrate des Reservoirs durch Akkumulieren der Ausflussraten aller jeweiligen Schleusentore erhalten wird; und

S3: Experimentierbetriebsphase:

S3-1: Bestimmen einer Dauer T eines Experimentiersystems entsprechend dem Wasser- und Sedimenteintragsprozess einer bestimmten Anforderung und in Kombination mit den zugehörigen Skalen; Bestimmen der $Q_{in}$~t und $S_{in}$~t -Beziehungen entsprechend dem Modell entsprechend einem festgelegten Wasser- und Sedimenteintragsprozess des Prototyps; und Bestimmen einer $Q_{out}$~t-Beziehung entsprechend einer Sedimentspitzenplanungsregel;

S3-2: Steuern einer Zuflussrate gemäß einem stetigen Strömungsprozess, so dass die entsprechende Strömungsrate gleich einem $Q_{in}$-Wert zu einem Anfangszeitpunkt (d.h.dem Zeitpunkt $t$=0) ist; Halten von $S_{in}$=0 und Starten der Wasserzirkulation des Experimentiersystems während des Zeitraums; und nachdem der Wasserstand vor dem Damm einen z-Wert zum Anfangszeitpunkt erreicht, Ablassen von Wasser gemäß $Q_{out}$ zum Anfangszeitpunkt und gleichzeitig Starten der Durchführung des Experiments; und

S3-3: synchrones Starten eines Moduls (1) zur Steuerung der Durchflussrate, eines Moduls (2) zur Zufuhr von Sedimenten, Ermöglichen, dass das Modul (1) zur Steuerung der Durchflussrate, das Modul (2) zur Zufuhr von Sedimenten, das Wasser-Sediment-Experimentmodul (3) und das Modul (4) zum Sammeln von ausgetragenen Sedimenten Wasser- und Sediment-Eingangsbedingungen gemäß den $Q_{in}$~t und $S_{in}$~t -Beziehungen erzeugen, Einstellen des Öffnungsgrads jedes Schleusentors einer Wasserabgabeeinheit (3.2.3) unter Verwendung einer Steuereinheit (3.2.2) und Durchführen des Wasserflusses und der Sedimentfreisetzung entsprechend der $Q_{out}$ ~ t-Beziehung; und gleichzeitig Inbetriebnahme der Messausrüstung (3.3) zur Durchführung der Messung der Wasserstrom- und Sedimentparameter;

S3-4: wenn $t$=$T$, Stoppen der Wasser- und Sedimentzufuhr zum Wasser-Sediment-Experimentmodul (3) und Beendigen der Wasser-Sediment-Messung und Beendigen des Experiments; und

S3-5: auf der Grundlage von Wasser-Sediment-Daten, die in dem Experiment gemessen wurden, Berechnen des Sedimentabflussverhältnisses des Reservoirs; und gleichzeitig, in Kombination mit einer Zeitskala, einer Wasserstandsskala, der Durchflussskala und der Sedimentkonzentrationsskala, umgekehrte Berechnen eines Sedimentabflussverhältnisparameters des Prototyps.

**Revendications**

1. Système de simulation d'expérimentation pour une planification de pic de sédiment de réservoir, comprenant un module de commande de débit (1), un module d'alimentation en sédiment (2), un module d'expérimentation d'eau-sédiment (3), et un module de collecte des sédiment déchargé (4), dans lequel

le module de commande de débit (1) est configuré pour personnaliser un processus de débit de crue qui répond aux exigences de l'expérimentation, et comprend un réservoir de stockage d'eau (1.1), une pompe à eau (1.2), et des sections de liaison (1.3), dans lequel le réservoir de stockage d'eau (1.1) est configuré pour stocker de l'eau expérimentale dont la capacité n'est pas inférieure à deux fois le volume d'eau requis pour l'expérimentation ; la pompe à eau (1.2) est une pompe à eau à courant continu (DC) à fréquence variable (1.2) et permet un réglage linéaire progressif du débit de pompage en ajustant la fréquence de travail d'un moteur à fréquence variable ; les sections de liaison (1.3) sont configurées pour une liaison hydraulique entre des équipements ; la section de liaison (1.3) entre le réservoir de stockage d'eau (1.1) et la pompe à eau (1.2) est un tuyau en acier sous pression, et la section de liaison (1.3) entre la pompe à eau (1.2) et le module d'expérimentation d'eau-sédiment (3) en aval est une canalisation à écoulement libre sans pression ; et la capacité d'adduction de chaque section de liaison (1.3) n'est pas inférieure à deux fois le débit expérimental maximal ; le module d'alimentation en sédiment (2) est configuré pour définir un écoulement transportant le sédiment qui répond aux exigences de l'expérimentation, et comprend un dispositif d'alimentation en sédiment (2.1), un dispositif de mélange de suspension (2.2), et une grille de guidage d'écoulement (2.3), dans lequel le dispositif d'alimentation en sédiment (2.1) est positionné au-dessus de la section de liaison (1.3) de canalisation à écoulement libre et est configuré pour ajouter des sédiments expérimentaux (2.1.1) dans l'écoulement d'eau expérimental, et le taux d'alimentation en sédiment expérimental est commandé en ajustant dynamiquement le degré d'ouverture du dispositif d'alimentation en sédiment (2.1) ; le dispositif de mélange de suspension (2.2) est positionné au fond de la section de liaison de canalisation à écoulement libre et est configuré pour réaliser un mélange suffisant d'écoulement d'eau expérimental et du sédiment expérimental afin d'empêcher le sédiment de se déposer ; la grille de guidage d'écoulement (2.3) est positionnée à l'extrémité de la section de liaison (1.3) de canalisation à écoulement libre et est configurée pour éliminer des vortex à grande échelle dans l'écoulement d'eau ;
le module d'expérimentation d'eau-sédiment (3) est configuré pour effectuer une expérimentation de planification de pic de sédiment dans la zone du réservoir, et comprend une section de réservoir de rivière (3.1), une section de corps de barrage (3.2), et un équipement de mesure (3.3), dans lequel la section de réservoir de rivière (3.1) est un modèle à l'échelle du réservoir de rivière naturel en amont du barrage et est formée d'un seul tenant par un matériau ABS à haute résistance au moyen d'une technique d'impression 3D ; la section de corps de barrage (3.2) est configurée pour simuler un corps de barrage et une structure évacuatrice de crue du barrage, comprenant une unité de retenue d'eau (3.2.1), une unité de commande (3.2.2) et une unité de libération d'eau (3.2.3) ; l'unité de commande (3.2.2) est configurée pour commander l'ouverture et la fermeture de la vanne de l'unité de libération d'eau (3.2.3) et pour commander le degré d'ouverture de la vanne ; l'unité de libération d'eau (3.2.3) comprend une pluralité de vannes et est configurée pour libérer l'écoulement transportant le sédiment ; l'équipement de mesure (3.3) est configuré pour mesurer un écoulement d'eau et des paramètres de mouvement de sédiment du module d'expérimentation ; et
le module de collecte des sédiment déchargés (4) est configuré pour la séparation d'eau-sédiment et la récupération d'eau-sédiment, et comprend un dispositif de retenue des sédiment et de drainage d'eau (4.1), un dispositif de collecte et de traitement des sédiment (4.2), un dispositif de pesage des sédiment (4.3) et une canalisation de retour d'eau (4.4), l'amont du dispositif de retenue des sédiment et de drainage d'eau (4.1) est connecté au module d'expérimentation d'eau-sédiment (3), et le dispositif de rétention des sédiment et de drainage d'eau (4.1) est configuré pour intercepter et filtrer les sédiment déchargés du réservoir et réaliser la séparation eau-sédiment et la libération d'eau claire ; le dispositif de collecte et de traitement des sédiment (4.2) est configuré pour collecter les sédiment rejetés par le réservoir et effectuer un traitement de séchage ; le dispositif de pesage des sédiment (4.3) est configuré pour peser les sédiment séchés afin de calculer le ratio de décharge des sédiment du réservoir, et les sédiment secs pesés sont réalimentés dans le dispositif d'alimentation en sédiment (2.1) ; et la conduite de retour d'eau (4.4) relie le dispositif de rétention des sédiment et de drainage d'eau (4.1) au réservoir de stockage d'eau (1.1) et est configurée pour réapprovisionner le réservoir de stockage d'eau (1.1) en eau claire filtrée de manière à former un système de circulation d'eau.

2. Système de simulation d'expérimentation pour une planification de pic de sédiment de réservoir selon la revendication 1, dans lequel le dispositif de mélange de suspension (2.2) est positionné au fond de la section de liaison à canalisation à écoulement libre (1.3) et comprend un capteur de pression (2.2.1), une grille à plaque mince (2.2.2), et un moteur à vibration à fréquence variable (2.2.3), dans lequel le capteur de pression (2.2.1) est configuré pour mesurer la pression d'eau de fond $p$ de l'écoulement transportant le sédiment en temps réel, le rapport volume-poids du fluide $y$ est calculé selon une formule $p=yh$ en combinaison avec la profondeur d'eau $h$, et $y$ est positivement corrélé avec la concentration en sédiment du fluide ; la taille des mailles de la grille à plaques minces (2.2.2) est 50 fois supérieure au diamètre médian des sédiment ; le moteur vibrant à fréquence variable (2.2.3) est configuré pour entraîner la grille à plaques minces (2.2.2) dans une micro-vibration alternative de haut en bas afin de favoriser la suspension des sédiment proches du fond ; les conditions de démarrage et la formule de calcul de la fréquence de vibration sont les suivantes :

$$u_s = \beta f \sqrt{gh},$$

dans lequel, $u_s$ représente la vitesse de démarrage du sable modèle ; g représente l'accélération de la gravité ; f représente la fréquence de base de la grille de vibration ; et $\beta$ représente le coefficient de correction de la fréquence.

3. Système de simulation d'expérimentation pour une planification de pic de sédiment de réservoir selon la revendication 1, dans lequel le sable modèle expérimental (2.1.1) libéré par le distributeur de sédiment (2.1) est constitué d'une coquille de résine et d'un endoplasme de quartz et peut être personnalisé en fonction du diamètre des sédiment et des exigences d'échelle de l'expérimentation en ajustant le contenu de l'endoplasme de quartz et la taille des coquilles de résine de manière à répondre aux exigences de l'expérimentation.

4. Système de simulation d'expérimentation pour une planification de pic de sédiment de réservoir selon la revendication 1, dans lequel l'équipement de mesure (3.3) comprend une pluralité d'ensembles de sondes de mesure de la vitesse d'écoulement (3.3.1), de sondes de mesure du niveau d'eau (3.3.2), de sondes de mesure des sédiment de lit (3.3.3) et de sondes de mesure des sédiment en suspension (3.3.4), dans lesquelles les sondes de mesure de la vitesse d'écoulement sont des sondes acoustiques à temps de transit, qui sont fixées uniformément à des surfaces murales des deux côtés de la section du réservoir de rivière (3.1) ; la vitesse d'écoulement est mesurée par la différence de temps entre l'émission et la réception de signaux acoustiques en diagonale à travers l'écoulement d'eau ; les sondes de mesure du niveau d'eau sont des sondes d'écho ultrasoniques disposées au-dessus de la section de liaison du canalisation à écoulement libre (1.3) et de la section du réservoir de rivière (3.1), et sont configurées pour calculer la distance entre une surface liquide et un point de mesure en fonction du temps d'aller-retour des ultrasons entre le point de mesure et la surface liquide afin de déduire un niveau d'eau en temps réel à la surface liquide ; les sondes de mesure des sédiment du lit sont des sondes ultrasoniques à haute fréquence, qui sont uniformément fixées à la surface du fond le long de la section du réservoir de rivière (3.1) et sont configurées pour calculer l'épaisseur du sédiment du lit en fonction du temps d'aller-retour entre le point de jaugeage et l'interface eau-sédiment ; la mesure des sédiment en suspension est effectuée par les sondes de mesure des sédiment en suspension (3.3.4) qui sont disposées uniformément sur une paroi intérieure du module d'expérimentation d'eau-sédiment (3) et sont configurées pour surveiller la concentration des sédiment en suspension dans la colonne d'eau le long du chenal.

5. Système de simulation d'expérimentation pour une planification de pic de sédiment de réservoir selon la revendication 4, dans lequel la sonde de mesure des sédiment en suspension (3.3.4) comprend un entraîneur dentelé (3.3.4.1), une plaque de détection mince et rigide (3.3.4.2), un faisceau plié (3.3.4.3) et une unité de traitement des signaux (3.3.4.4), dans lequel le circuit d'attaque dentelé (3.3.4.1) est un circuit d'attaque capacitif comprenant une structure dentelée fixe (3.3.4.5) et une structure dentelée motrice (3.3.4.6), et la structure dentelée fixe est maintenue statique tandis que la structure dentelée motrice peut se déplacer librement ; la poutre pliée (3.3.4.3) est faite de silicium polycristallin et est configurée pour supporter d'autres structures ; l'unité de traitement des signaux (3.3.4.4) est configurée pour convertir un signal de courant en données de concentration de sédiment ; lorsque l'écoulement transportant le sédiment expérimental s'écoule à travers un dispositif de mesure de la densité des microfluides, une chute de pression existe entre les deux extrémités d'un micropassage, de sorte que la plaque de détection mince et rigide (3.3.4.2) génère une oscillation de résonance ; la fréquence inhérente générée par la plaque de détection mince et rigide (3.3.4.2) dépend de la densité du fluide à mesurer, c'est-à-dire qu'une plus grande densité d'une substance mesuré correspond à une plus grande densité de la substance mesurée, la capacité entre la structure dentelée fixe (3.3.4.5) et la structure dentelée motrice (3.3.4.6) est modifiée par l'oscillation de résonance de manière à générer un signal électrique ; le signal électrique est converti en données de concentration de sédiment en suspension par l'unité de traitement des signaux (3.3.4.4), et le coefficient de conversion doit être calibré quantitativement avant l'expérimentation.

6. Procédé de simulation d'expérimentation pour une planification de pic de sédiment de réservoir selon la revendication 1, comprenant en particulier les étapes suivantes consistant à :

S1. Phase de préparation de l'équipement : déterminer l'échelle horizontale $\lambda_l$ et l'échelle verticale $\lambda_h$ du modèle en fonction des données topographiques réelles d'un canal de rivière et d'un réservoir, à l'aide de l'impression 3D avec un matériau ABS pour former une section de réservoir de rivière (3.1), et d'un matériau en verre organique pour construire une section de corps de barrage (3.2) ; avant l'expérimentation, sur la base des données de sédiment en suspension et des conditions d'échelle des sédiment, personnaliser du sable du modèle à stocker dans un nourrisseur de sédiment (2.1) ; pendant l'expérimentation, installer des sondes de mesure de la vitesse d'écoulement (3.3.1), de sondes de mesure du niveau d'eau (3.3.2), de sondes de mesure des sédiment du lit (3.3.2) et de sondes de mesure des sédiment en suspension (3.3.3) le long du canal pour obtenir de manière synchronisée la vitesse d'écoulement, le niveau d'eau, l'épaisseur de l'accumulation des sédiment du fond et la concentration des sédiment en suspension de l'écoulement d'eau expérimentale ;

S2 : Phase de préparation des données : en fonction d'une séquence de processus de débit, de concentration de sédiment et de temps d'adduction de sédiment à une station hydrométrique en amont d'un canal de rivière et en combinaison avec des échelles connexes, établir une séquence de processus de débit et de concentration de sédiment à l'entrée d'un module d'expérimentation d'eau-sédiment (3) ; en fonction de l'échelle horizontale $\lambda_l$ et de l'échelle verticale $\lambda_h$ du modèle et d'un critère de similarité de la gravité, déterminer une échelle de vitesse d'écoulement comme $\lambda_U=\lambda_h^{0,5}$, déterminer une échelle de débit comme $\lambda_Q=\lambda_l\lambda_h^{1,5}$, déterminer une échelle de vitesse de sédimentation comme $\lambda_\omega=\lambda_h^{1,5}\lambda_l^{-1}$, et déterminer une échelle de concentration de sédiment comme $\lambda_S=\lambda_h^{0,5}\lambda_l^{0,92}$ ; et selon un schéma de programmation prédéfini d'un réservoir prototype, établir un schéma de processus de libération de débit pour chaque vanne, le degré d'ouverture e et le débit de sortie $Q_{out}$ d'une seule vanne satisfaisant à la relation suivante :

$$Q_{\text{out}} = \left(0.6 - 0.176\frac{e}{H}\right) \cdot b \cdot e\sqrt{2gH}$$

,

dans lequel, e représente le degré d'ouverture de la vanne ; H représente la hauteur d'eau au niveau de la vanne, c'est-à-dire une valeur de différence entre le niveau d'eau z devant le barrage et l'élévation du plancher ; et b représente la largeur de la vanne, et le débit de sortie total du réservoir est obtenu en accumulant les débits de sortie de toutes les vannes respectives ; et

S3 : Phase d'opération expérimentale :

S3-1 : selon le processus d'arrivée d'eau et de sédiment d'une certaine exigence et en combinaison avec les échelles connexes, déterminer une durée T d'un système expérimental ; selon un processus d'arrivée d'eau et de sédiment du prototype, déterminer les relations $Q_{in}\sim t$ et $S_{in}\sim t$ correspondant au modèle ; et selon une règle de programmation des pics de sédiment, déterminer une relation $Q_{out}\sim t$ ;

S3-2 : commander un débit d'entrée selon un processus d'écoulement régulier, de sorte que le débit correspondant soit égal à une valeur $Q_{in}$ à un moment initial (par exemple le moment $t=0$) ; pendant la période, maintenir $S_{in}=0$ et commencer à effectuer la circulation d'eau du système expérimental ; et après que le niveau d'eau devant le barrage a atteint une valeur z au moment initial, libérer d'eau selon $Q_{out}$ au moment initial, et en même temps, commencer à effectuer l'expérimentation ; et

S3-3 : démarrer de manière synchronisée un module de commande de débit d'entrée (1) et un module d'alimentation en sédiment (2), permettant au module de commande de débit d'entrée (1) et au module d'alimentation en sédiment (2) de générer des conditions d'arrivée d'eau et de sédiment selon les relations $Q_{in}\sim t$ et $S_{in}\sim t$, ajuster le degré d'ouverture de chaque vanne d'une unité de libération d'eau (3.2.3) à l'aide d'une unité de commande (3.2.2), et effectuer l'écoulement d'eau et la libération des sédiment conformément à la relation $Q_{out}\sim t$ ; et en même temps, mettre en marche l'équipement de mesure (3.3) pour effectuer la mesure des paramètres de l'écoulement d'eau et de sédiment ;

S3-4 : lorsque $t=T$, arrêter l'alimentation en eau et en sédiment du module d'expérimentation d'eau-sédiment (3) et arrêter la mesure d'eau-sédiment, et mettre fin à l'expérimentation ; et

S3-5 : sur la base des données d'eau-sédiment mesurées lors de l'expérimentation, calculer le rapport de décharge de sédiment du réservoir ; et en même temps, en combinaison avec une échelle de temps, une échelle de niveau d'eau, une échelle de débit et une échelle de concentration de sédiment, calculer à l'inverse un paramètre de rapport de décharge de sédiment du prototype.

Fig.1

Fig. 2

Quartz endoplasm

Resin shell

2.1.1

Fig.3

3.3.4.4

3.3.4.1

3.3.4.6

3.3.4.5

3.3.4.3

3.3.4.2

3.3.4

Fig. 4

Fig.5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103711101 A
- CN 108286237